# EUROPEAN PATENT APPLICATION

(11) **EP 0 940 293 A1**
(43) Date of publication of application: **08.09.1999**
(21) Application number: 98301621.3
(22) Date of filing: 05.03.1998
(51) Int. Cl.: B60Q 1/30

(54) **Motor vehicle warning signal light assembly**

(71) Applicant: Chang, Jih-Cheng, Taipei (TW)
(72) Inventor: Chang, Jih-Cheng, Taipei (TW)
(74) Representative: Stonehouse, Sidney William

(57) **Abstract**

A motor vehicle warning signal light assembly (10) is provided to be installed in a motor vehicle at the rear window. The assembly includes a stop signal light (20), an inversely disposed V-shaped signal light (30), a control switch (40), a left-hand turn signal light (50) and a right-hand turn signal light (60). The installed stop signal light (20) is synchronously operated with the stop lights of the motor vehicle; the inversely disposed V-shaped signal light (30) and the stop signal light (20) form a triangle signal light, being manually turned on by the control switch (40). The left-hand and right-hand turn signal lights (50, 60) of the assembly are respectively caused to be operated with the left-hand and right-hand turn signal lights of the motor vehicle.

## Description

The present invention relates to a motor vehicle warning signal light assembly, and more particularly to such a warning signal light assembly that can be operated to produce a stop signal, a directional signal, and an emergency warning signal.

In case of emergency when driving a motor vehicle, the driver may usually step on the brake pedal to turn on the stop lights and/or switch on the left-hand and right-hand turn signal lights to flash. However, the drivers of motor vehicles coming from behind may be unable to know the actual meaning of the mentioned signals, or may not easily pay attention to them immediately. Therefore, a traffic accident may occur under such a situation. Further a motor vehicle driver may later put a triangle sign behind the vehicle in case of emergency to give a warning signal. After the emergency situation has been eliminated, the driver may forget to pick up the triangle sign and to take it back to the motor vehicle. Leaving a warning sign on the road will disturb the traffic. In addition, regular triangle signs cannot reflect light effectively and properly during bad weather for example when raining, or even cannot be prominently seen by the drivers of motor lorries and vans (motor trucks). Therefore, regular triangle signs produce little effect in many urgent situations.

Various warning signal light apparatuses have been developed for use in motor vehicles. Examples are to be seen in U.S. Patent No. 4 835 515 entitled "Vehicle Warning Signal Light" and U.S. Patent No. 5 041 813 entitled "Automobile Disabled Sign".

The main object of the present invention is to provide a motor vehicle warning signal light assembly that can be immediately used to give a clear warning signal in case of emergency and that can be controlled to produce different signal in corresponding conditions without being affected by the weather or other reasons.

According to a first aspect the present invention consists in a motor vehicle warning signal light assembly adapted to be mounted within a motor vehicle at a rear window thereof, characterised in that it comprises:
an elongated stop signal light adapted to be connected for synchronous operation with stop lights of the motor vehicle;
an inverted V-shaped signal light which for use is disposed above said elongated stop signal light and forms with said elongated stop signal light a triangle signal light, the inverted V-shaped signal light being located for use in a fixed position relative to the elongated stop signal light;
a manual control switch electrically connecting said elongated stop light and said V-shaped signal light;
a left-hand turn signal light which for use is disposed adjacent to a left side of said elongated stop signal and is adapted to be connected for synchronous operation with a left-hand turn signal light of the motor vehicle, and
a right-hand turn signal light which for use is disposed adjacent to a right side of said elongated stop signal light and is adapted to be connected for synchronous operation with a right-hand turn signal of the motor vehicle.

The V-shaped signal light and the stop signal light form the triangle signal light for use in an emergency.

The stop signal light, the V-shaped signal light, the left-hand turn signal light and the right-hand turn signal light of the assembly may be respectively formed, for example, of light emitting diodes, electroluminescent lamps, or luminescent devices. The necessary power supply of the assembly may be obtained from the battery of the motor vehicle to which the assembly is fitted for use.

According to a second aspect the present invention consists in a motor vehicle having a rear window and characterised in that it has mounted therein at the rear window a motor vehicle warning signal light assembly in accordance with the foregoing first aspect of the present invention, the left-hand turn signal light and right-hand turn signal light being disposed respectively adjacent to the left side and the right side of the elongated stop signal light and being connected respectively for synchromous operation with a left-hand turn signal light and a right-hand turn signal light of the motor vehicle.

An embodiment of the invention will now be described, by way of example only, with reference to the accompanying drawings, in which:
**Fig. 1** shows a motor vehicle warning signal light assembly in accordance with the present invention installed in a motor vehicle on the inside of a rear window;
**Fig. 2** is a circuit diagram of the assembly, and
**Fig. 3** shows a modification of the motor vehicle warning signal light.

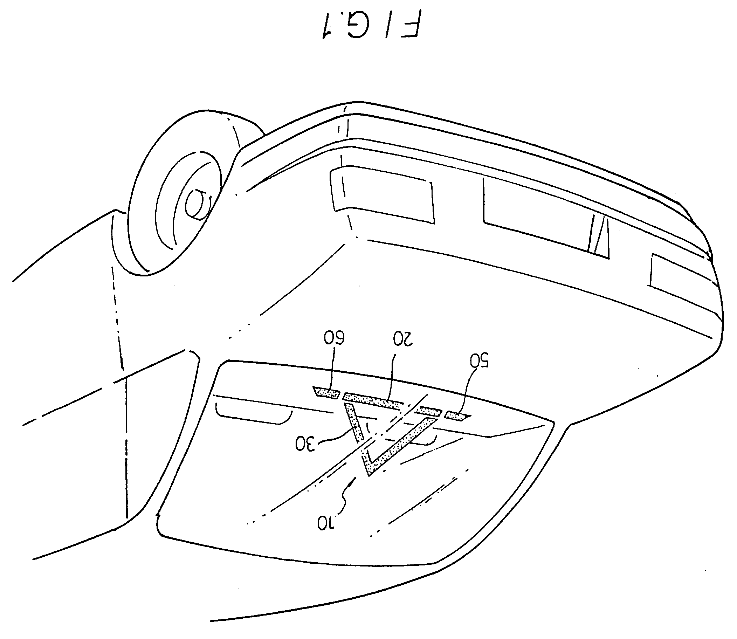

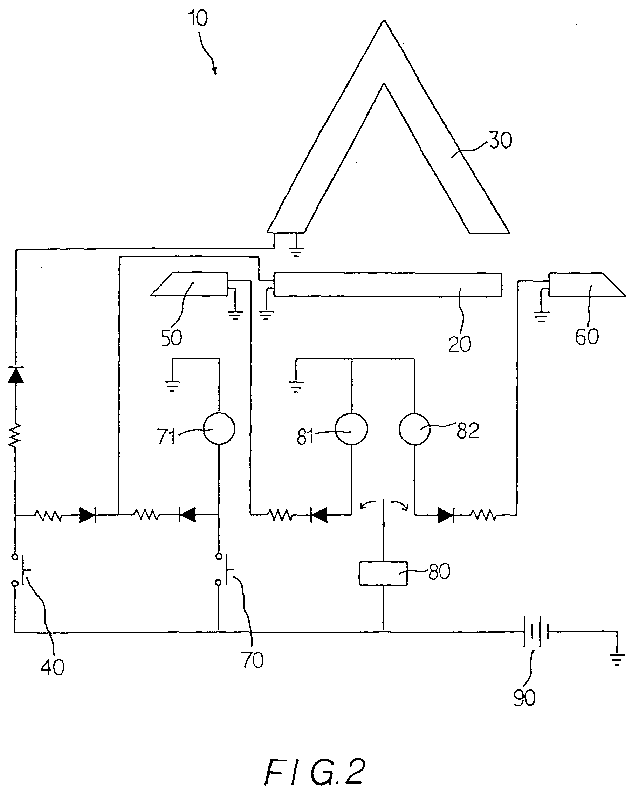

Referring to Figure 1 and Figure 2, a motor vehicle warning signal light assembly 10 is shown which comprises a stop signal light 20, an inversely disposed V-shaped signal light 30, a control switch 40, a left-hand turn signal light 50 and a right-hand turn signal light 60. The assembly 10 is mounted for use on the inside surface of a rear window of a motor vehicle.

Referring to Figure 2, the necessary power supply for the motor vehicle warning signal light assembly 10 is obtained from the battery 90 of the motor vehicle. The stop signal light 20 is connected to stop lights 71 of the motor vehicle. When the brake pedal 70 of the motor vehicle is stepped on, the stop lights 71 of the motor vehicle and the stop signal light 20 of the motor vehicle warning signal light assembly 20 are synchronously turned on. When the brake pedal 70 is released, the stop lights 71 and the stop signal light 20 are synchronously turned off. The V-shaped signal light 30 is inversely disposed above the elongated stop signal light 20, therefore the V-shaped signal light 30 and the stop signal light 20 form together a warning triangle signal light.

The control switch 40 controls the V-shaped signal light 30 and the stop signal light 20 independently without being affected by the brake pedal 70. Therefore, when in an emergency, the control switch 40 is manually operated to turn on the V-shaped signal light 30 and the stop signal light 20, the V-shaped signal light 30 and the stop signal light 20 give a warning signal to drivers of vehicles coming from behind.

The left-hand turn signal light 50 is connected to a left-hand turn signal light 81 of the motor vehicle. When the left-hand turn signal light 81 is controlled by a flash control device 80 of the motor vehicle to flash, the left-hand turn signal light 50 of the motor vehicle warning signal light assembly 10 is synchronously driven to flash.

The right-hand turn signal light 60 of the assembly 10 is connected to a right-hand turn signal light 82 of the motor vehicle. When the right-hand turn signal light 82 is controlled by the flash control device 80 of the motor vehicle to flash, the right-hand turn signal light 60 of the motor vehicle warning signal light assembly 19 is synchronously driven to flash.

Referring to Figure 1 again, when in use, the motor vehicle warning signal assembly 10 serves as a third stop light. When in an emergency, the V-shaped signal light 30 and the stop signal light 20 are simultaneously turned on they give a Warning triangle signal to vehicle drivers coming from behind. Further, when the motor vehicle is turned to the left or to the right, the left-hand turn signal light 50 or right-hand turn signal light 60 of the motor vehicle Warning signal light assembly 10 is synchronously driven to flash.

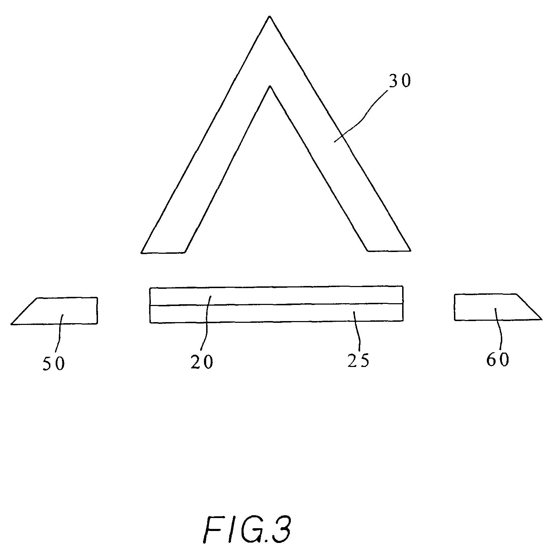

Referring now to the modification shown in Figure 3, an additional reversing warning signal 25 is disposed under (or above) the stop signal light 20. When reversing the vehicle to which the motor vehicle warning signal light is applied the reversing warning light 25 will be turned on. The design of electric circuit to achieve this is not shown in the Figure since a suitable form which it may take will be readily understood by those skilled in the art.

While only one embodiment of the present invention has been shown and described, it will be understood that various modifications and changes could be made thereunto without departing from the spirit and scope of the invention disclosed.

## Claims

1. A motor vehicle warning signal light assembly adapted to be mounted within a motor vehicle at a rear window thereof, characterised in that it comprises;
an elongated stop signal light (20) adapted to be connected for synchronous operation with stop lights of the motor vehicle;
an inverted V-shaped signal light (30) which for use is disposed above said elongated stop signal light (20) and forms with said elongated stop signal light (20) a triangle signal light, the inverted V-shaped signal light (3) being located for use in a fixed position relative to the elongated stop signal light (2);
a manual control switch (40) electrically connecting said elongated stop signal light (20) and said V-shaped signal light (30);
a left-hand turn signal light (50) which for use is disposed adjacent to a left side of said elongated stop signal light (20) and is adapted to be connected for synchronous operation with a left-hand turn signal light of the motor vehicle, and
a right-hand turn signal light (60) which for use is disposed adjacent to a right side of said elongated stop signal light (20) and is adapted to be connected for synchronous operation with a right-hand turn signal light of the motor vehicle.

2. The motor vehicle warning signal light assembly of claim 1 characterised in that the stop signal light (20), the inverted V-shaped signal light (30), the left-hand turn signal light (50) and the right-hand turn signal light (60) are adapted to be powered by a battery of the motor vehicle.

3. The motor vehicle warning signal light assembly of claim 1 or claim 2 characterised in that said elongated stop signal light (20) and said inverted V-shaped signal light (30) are synchronously controlled by said manual control switch (40) so as to be independent of operation of a brake pedal of the motor vehicle to which the assembly is fitted for use.

4. The motor vehicle warning signal light assembly of any preceding claim characterised in that said stop signal light (20), said inverted V-shaped signal light (30), said left-hand turn signal light (50) and said right-hand turn signal light (60) are respectively formed of light emitting diodes.

5. The motor vehicle warning signal light assembly of any of claims 1 to 3 characterised in that said stop signal light (20), said inverted V-shaped signal light (30), said left-hand turn signal light (50) and said right-hand turn signal light (60) are respectively formed of electroluminescent lamps.

6. The motor vehicle warning signal light assembly of any of claims 1 to 3 characterised in that said stop signal light (20), said inverted V-shaped signal light (30), said left-hand turn signal light (50) and said right-hand turn signal light (60) are respectively formed of luminescent devices.

7. The motor vehicle warning signal light assembly of any of claims 1 to 4 characterised in that said inverted V-shaped signal light (30) is comprised of two elongated light emitting devices connected into an inverted V-shape.

8. The motor vehicle warning signal light assembly of any preceding claim characterised in that it further comprises a reversing warning light (25) which for use is disposed under or above said stop signal light (20).

9. A motor vehicle having a rear window and characterised in that it has mounted therein at the rear window a motor vehicle warning signal light assembly (10) as claimed in any preceding claim, the left-hand turn signal light (50) and right-hand turn signal light (60) being disposed respectively adjacent to the left side and the right side of the elongated stop signal light (20) and being connected respectively for synchronous operation with a left-hand turn signal light and a right-hand turn signal light of the motor vehicle.
